Europäisches Patentamt

(19) European Patent Office

Office européen des brevets

(11) Publication number: **0 248 799**
**B1**

## (12) EUROPEAN PATENT SPECIFICATION

(45) Date of publication of the patent specification:
29.03.89

(51) Int. Cl.⁴: **E 03 B 1/02,** E 03 B 11/14

(21) Application number: 86901080.1

(22) Date of filling: 28.01.86

(86) International application number:
PCT/FI 86/00013

(87) International publication number:
WO 86/04628 (14.08.86 Gazette 86/18)

(54) UTILITY WATER DISTRIBUTION SYSTEM.

(30) Priority: 04.02.85 FI 850454

(43) Date of publication of application:
16.12.87 Bulletin 87/51

(45) Publication of the grant of the patent:
29.03.89 Bulletin 89/13

(84) Designated Contracting States:
AT CH DE GB LI NL SE

(56) References cited:
SE-B-371 848
SE-B-392 308
US-A-2 614 853

(73) Proprietor: Vyrmetoder AB, Näsbydalsvägen 13,
S-183 31 Täby (SE)

(72) Inventor: Reijonen, Yrjö, Humalniementie 6A, SF-
00840 Helsingfors 84 (FI)

(74) Representative: Mrazek, Werner, Dr. Ludwig Brann
Patentbyra AB Drottninggatan 7 Box 1344, S-751
43 Uppsala (SE)

LIBER, STOCKHOLM 1989

## Description

The present invention concerns a utility water distribution system comprising a trunk water main to which has been connected a water reservoir.

It has been found when constructing water mains that tens of hours are required to fill them. In certain cases, the water quantity in the pipelines would meet the 24-hour requirements of the consumers connected to the system.

Large and medium-sized water supply works have elevated water reservoirs (either a water tower or a tank without feet erected at high altitude), their purpose being to ensure uniform availability of water at all consumer connections served by the system. In small water supply installations, water distribution is usually managed by the aid of one or several pressurized tanks, which are intended to level out the pressure fluctuations in the pipelines arising from the disproportion between pumping and consumption and, to a certain extent, also to serve as a store of water.

The elevated water reservoir with ancillary piping is today the commonest utility water storing and distributing system. All the same, it presents various drawbacks, such as:

- High initial cost
- In frequent instances, disfiguring of the scenery
- Drop of water pressure at greater distance from the reservoir
- Water distribution is hampered by deposits on the inner surface of the pipes in old pipelines, which tolerate no raising of pressure
- The system cannot be uniformly expanded
- At high temperatures, the growth of microorganisms increases strongly, implying increased need of chemicals. On the other hand, severe cold implies added expenses for thermal lagging; in the absence of lagging an ice crust will form, reducing the reservoir's capacity.
- In areas susceptible to earthquakes, elevated reservoirs have to be built with greater strength than normal, thus involving extra cost in regions where funds are scarce as it is
- An elevated reservoir is vulnerable, and difficult to protect, in times of crisis.

The object of the present invention is to eliminate the drawbacks mentioned. The utility water distribution system of the invention is characterized in that the water reservoir consists of a pipe, closed at one end, installed in the ground and connected to the trunk main by an automatically operating shut-off valve provided with a float. With the aid of the invention the need of separate so-called elevated water reservoirs or of pressurized tanks is abolished.

It is fairly common when constructing municipal trunk water mains to anticipate to some extent the future consumption of water by constructing trunk mains in areas for which a development plan has been worked out or is in preparation. Such parts of the trunk mains constructed before their time, for instance, can be put to advantageous use with the aid of the present invention. For example, a reservoir pipe with 300 m length, 590 mm I.D. and 0.25 MPa initial pressure carries, when pressurized to 0.30 MPa, a store of water well over 40 m³, equivalent to the capacity of four, larger than average, pressurized tank installations.

An advantageous embodiment of the invention is characterized in that on the end of the pipe has been provided an air-filling valve. Hereby additional air and pressure can be introduced in the pipe, because the air quantity diminishes in prolonged use.

The invention is described in the following with the aid of an example, referring to the attached drawing, wherein

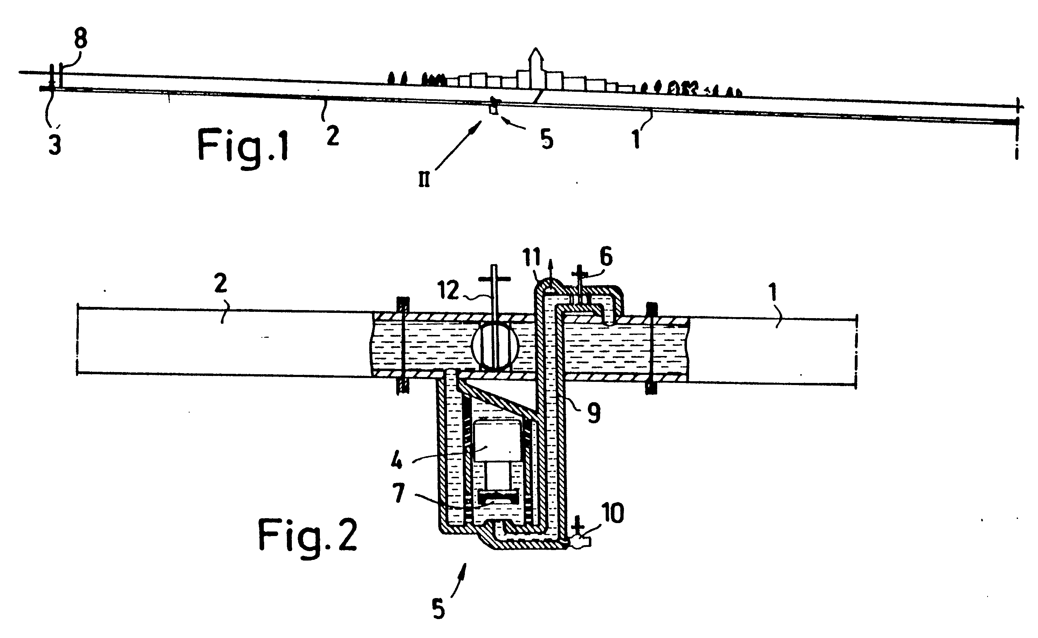

Fig. 1    presents a utility water distribution system in the ground.

Fig. 2    presents, enlarged and sectioned, the shut-off valve indicated at the point II in Fig. 1.

The utility water distribution system comprises a trunk water main 1, to which has been connected a water reservoir 2. The water reservoir 2 consists of a pipe installed in the ground and closed at one end, 3. The water reservoir, more properly called a reservoir pipe, has been connected to the trunk water main 1 by means of an automatically operating float 4. The reservoir pipe operates on the same principle as a pressurized tank. When the water pressure is higher in the trunk water main 1 than in the pipe 2, water flows from the trunk water main through the valve 6 and flap 7 into the pipe 2 until the air pressure in the pipe 2 and the water pressure in the trunk water main 1 have reached equilibrium. Conversely, the reservoir pipe 2 releases water into the trunk water main 1 when the water pressure in the trunk water main falls from the state of equilibrium. When as a consequence of prolonged low water pressure in the trunk water main the water level within the shut-off valve 5 goes so far down that the float 4 and the flap 7 connected therewith sink down owing to gravity, the flap valve 7 closes and the water flow from the reservoir pipe to the trunk water main ceases. The flap valve 7 will then obviously act like a unidirectional valve, which cannot come into contact with air because when it closes there will always remain on top of it a water column of a certain height. Only after the water pressure in the trunk water main 1 has increased to sufficient height, compared with the air pressure prevailing inside the reservoir pipe 2, the valve 7 will open, to begin with due to the pressure acting on it from below, and after the water has risen within the shut-off valve 7, due to the buoyancy of the float 4, which also keeps the shut-off valve open for reciprocating water flow between the trunk water main 1 and the reservoir pipe 2 until once again the water level inside the shut-off valve 5 falls and causes closure of the shut-off valve, as has been described already.

It is thus understood that the shut-off valve 5 permits free flow of water through the valve in both directions, but it admits no air from the reservoir pipe 2 into the trunk water main 1.

When the reservoir pipe has been in use for a prolonged period and the air quantity which it contains has been reduced as a result of dissolving in the water, air is added into it, for instance with the aid of a transportable compressor, through the filling pipe 8. Before proceeding to fill air, the valve 6 in the connecting pipe 9 between the shut-off valve 5 and the trunk water main is closed and the drain cock 10 opened. Hereby the reservoir pipe 2, which is sloping toward the shut-off valve 3, and the upper part of the shut-off valve are drained of water. When no more water comes from the drain cock 10, the shut-off valve 5 has closed, and the requisite air quantity for obtaining an appropriate initial pressure may now be introduced into the reservoir pipe 2 through the filling pipe 8. The cock 10 is then closed and the valve 5 opened, whereafter the reservoir pipe 2 once again operates in the normal way.

Owing to pressure fluctuations, small quantities of dissolved air are set free from the water, this air escaping from the trunk water main through an automatic venting valve 11 on the connecting pipe 9.

When the water demand increases, for instance so that water is henceforth required at the end 8 of the reservoir pipe, the valve 12 is opened and the valve 6 closed, whereby the reservoir pipe is converted into a normal trunk pipe and water becomes available at the point 8. If the water demand at the point 8 should further increase, for instance owing to a residential development growing up there, it is proper to add a new reservoir pipe from the point 8 onwards. The shut-off valve 5 is then dismounted and replaced with a pipe section of equivalent length. The shut-off valve 5 may be moved to replace the valve 3. It is possible in this way to expand the distribution system ever forward, or in other directions as well.

It is obvious to a person skilled in the art that the invention is not confined to the examples presented in the foregoing and that it may vary within the scope of the claims stated below.

## Claims

1. A utility water distribution system comprising a trunk water main (1) to which has been connected a water reservoir (2), characterized in that the water reservoir (2) consists of a pipe installed in the ground and closed at one end and which has been connected to the trunk water main (1) by an automatically operating shut-off valve (5) provided with a float (4).

2. Distribution system according to claim 1, characterized in that the end of said pipe has been provided with an air filling valve.

## Patentansprüche

1. Distributionssystem für Gebrauchswasser, mit einer Stammwasserleitung (1), an welche ein Wassersammelgefäss (2) angeschlossen ist, dadurch gekennzeichnet, dass das Wassersammelgefäss (2) aus einem Rohr besteht, das im Erdboden angeordnet und an einem Ende geschlossen ist und das an die Stammwasserleitung (1) durch ein automatisch wirkendes, mit einem Schwimmkörper (4) versehenes Abschaltventil (5) angeschlossen ist.

2. Distributionssystem nach Anspruch 1, dadurch gekennzeichnet, dass das Ende des Rohres mit einem Entlüftungsventil versehen ist.

## Revendications

1. Système de distribution d'eaux ménagères, comprenant une conduite principale d'eau (1), à laquelle est associé un réservoir à eau (2), caractérisé en ce que ledit réservoir comporte un tuyau, qui est mis en place en terre et fermé à une extrémité et qui a été raccordé à la conduite principale d'eau (1) par une soupape de fermeture de fonctionnement automatique (5), qui est equipée d'un flotteur (4).

2. Système de distribution d'eaux ménagères selon la revendication 1, caractérisé en ce que l'extrémité dudit tuyau a été équipée d'une soupape de remplissage d'air.

Fig.1

Fig.2